# EUROPEAN PATENT APPLICATION

(11) **EP 4 763 380 A1**
(43) Date of publication of application: **24.06.2026**
(21) Application number: 24383402.5
(22) Date of filing: 18.12.2024
(51) Int. Cl.: B22F 10/28, B22F 10/31, B22F 10/38, B33Y 10/00

(54) **METALLIC RETICULAR STRUCTURE AND METHOD FOR ESTABLISHING PARAMETERS OF ADDITIVE MANUFACTURING BY POWDER BED FUSION OF A METAL PART**

(71) Applicant: LORTEK S. COOP., 20240 Ordizia (Gipuzkoa) (ES)
(72) Inventor: GOMEZ GONZALEZ, Raul, 20240 ORDIZIA (ES); MANCISIDOR TELLERIA, Ane Miren, 20240 ORDIZIA (ES); SAN SEBASTIAN ORMAZABAL, Maria, 20240 ORDIZIA (ES)
(74) Representative: Galbaian S.Coop.

(57) **Abstract**

Metallic reticular structure used to establish powder bed fusion additive manufacturing parameters of a metal part, comprising: a rectangular shaped base A having a first end 1A and a second end 2A, a rectangular shaped wall B having a first end 1B and a second end 2B, wall B projecting from the first end 1A of base A at an angle αAB of 90°+/- 5°, the first end 1B of wall B being attached to the first end 1A of base A, a first rod C of cylindrical shape extending between the second end 2A of base A and the second end 2B of wall B, the first rod C forming with respect to wall B an angle αBC of 45°+/- 5° and a second rod J of cylindrical shape having a first end 1J and a second end 2J, the second rod J projecting from the second end 2A of the base A according to an angle αAJ of 90°+/- 5°, the first end 1J of the second rod J being attached to the first end 2A of the base A. Method for establishing additive manufacturing parameters by melting the powder bed of a metal part with the reticular structure.

## Description

### TECHNICAL FIELD

The present invention relates to methods of optimising powder bed fusion additive manufacturing parameters.

### PRIOR ART

Powder bed fusion is an additive manufacturing, or 3D printing, technology that uses a heat source (usually a laser) to sinter or fuse powder particles. Like other additive processes, it is done layer by layer until the part is complete.

Before manufacturing a part by this method, it is necessary to establish the manufacturing parameters that ensure the quality and characteristics in terms of defects of the final part, such as those related to porosity and lack of fusion. However, when it comes to manufacturing reticulated and/or thin metal parts in sectors such as aeronautics, automotive or health, such as in the manufacture of heat exchangers or implants, the different orientations of the rods or columns of the reticular parts make it difficult to establish the manufacturing parameters. These types of metallic parts are usually made of rare, limited and/or expensive materials and are the result of topological optimisation or bio-inspiration through other sources such as biomimetics, resulting in parts that combine dense zones with very thin ones that can be filled or covered by reticular or lattice structures.

Cubic samples are usually used to establish the manufacturing parameters. In the first stage, the infill parameters of the densest parts of the part to be manufactured are established and then, in a second stage, the border parameters are established. When it comes to manufacturing reticular and/or reticular lattice metal parts, once the infill and border parameters have been defined, in a third stage the parameters for the reticular parts of the part to be manufactured are established.

Document WO2023175525A1 describes a method for optimising additive manufacturing parameters of metal parts. The method comprises the steps of fabricating a set of test samples on a build platform of an additive manufacturing system, each test sample being monitored by at least one electromagnetic sensor to obtain at least one optimised set of process parameters, and storing said at least one optimised set of process parameters for later use during the process of building the metal parts.

### DISCLOSURE OF THE INVENTION

The object of the invention is to provide a metallic reticular structure and a method for establishing parameters for additive manufacturing by powder bed fusion of a metallic part, as defined in the claims.

A first aspect of the invention relates to a metallic reticular structure used to establish powder bed fusion additive manufacturing parameters, comprising:
- a rectangular shaped base having a first end and a second end,
- a rectangular shaped wall having a first end and a second end, the wall projecting from the first end of the base at an angle of 90°+/- 5°, the first end of the wall being attached to the first end of the base,
- a first rod of cylindrical shape extending between the second end of the base and the second end of the wall, the first rod forming with respect to the wall an angle of 45°+ /-5°, and
- a second rod of cylindrical shape having a first end and a second end, the second rod projecting from the second end of the base at an angle of 90°+/- 5°, the first end of the second rod being attached to the first end of the base.

A second aspect of the invention relates to a method for establishing powder bed fusion additive manufacturing parameters of a metal part, comprising the following steps:
- manufacturing the reticular structure on a powder bed fusion additive manufacturing platform based on predefined manufacturing parameters;
- polishing the surface of the reticular structure;
- measuring defects on the polished surface; and
- selecting one of the additive manufacturing parameters of the metal part based on the defects measured on the polished surface.

The inventors have developed a reticular structure and a method for establishing or determining powder bed fusion manufacturing parameters of metal parts, in which infill parameters and border parameters, as well as the interaction of both parameters, can be defined and optimised for a single part. This is very useful when you want to define manufacturing parameters for thin and reticular metal parts, which often have parts with angles that with prior art methods often require a lot of trial-and-error tests to establish the final parameters. This is often resource-intensive, both in terms of metal material, which is usually limited and expensive, and time. As demonstrated in the examples, the structure and method of the invention minimise all these drawbacks.

These and other advantages and features of the invention will become apparent in view of the figures and the detailed description of the invention.

### DESCRIPTION OF THE DRAWINGS

Figure 1 shows a perspective view of a metallic reticular structure according to one embodiment of the invention.
Figures 2A, 2B and 2C show frontal schematic views of the reticular structure in figure 1.
Figure 3 shows an image of a plan view of a powder bed fusion additive manufacturing platform showing the laser paths for manufacturing the structure of figure 1 and two other embodiments of the prior art.

### DETAILED DISCLOSURE OF THE INVENTION

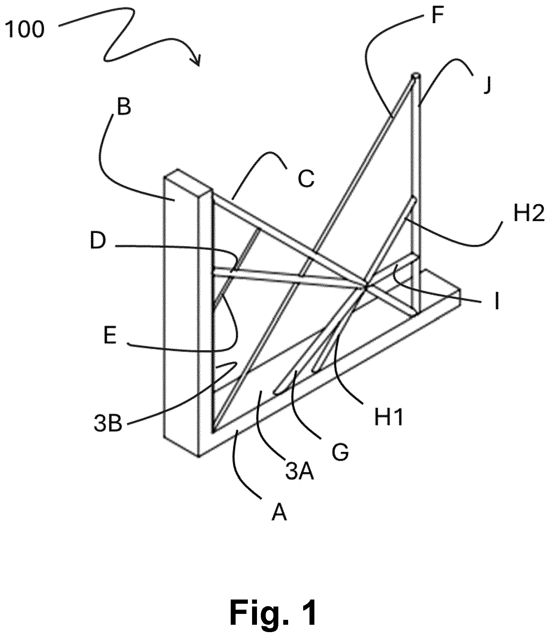

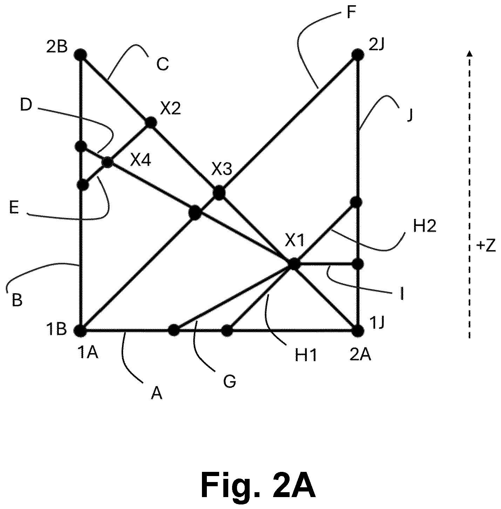

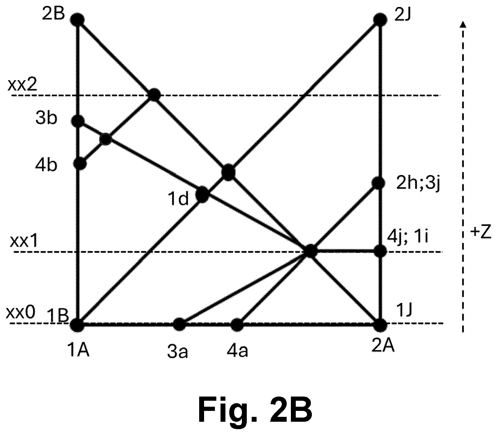

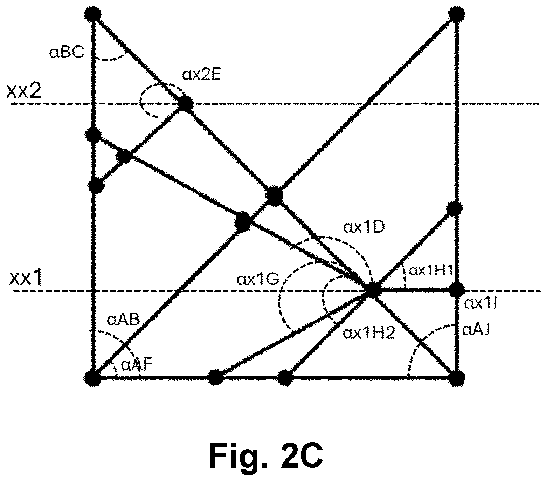

Figures 1, 2A, 2B and 2C show a metal reticular structure 100 used to establish parameters for additive manufacturing by powder bed fusion of a metal part comprising:
- a rectangular-shaped base A having a first end 1A and a second end 2A,
- a rectangular shaped wall B having a first end 1B and a second end 2B, wall B projecting from the first end 1A of base A according to an angle αAB of 90°+/- 5°, the first end 1B of wall B being attached to the first end 1A of base A,
- a first rod C of cylindrical shape extending between the second end 2A of the base A and the second end 2B of the wall B, the first rod C forming with respect to the wall B an angle αBC of 45°+/- 5°, and
- a second rod J of cylindrical shape having a first end 1J and a second end 2J, the second rod J projecting from the second end 2A of the base A according to an angle αAJ of 90°+/- 5°, the first end 1J of the second rod J being attached to the first end 2A of the base A.

In a preferred embodiment, shown in figure 1B, the reticular structure of the invention comprises a first node X1 at the first rod C, from which at least one additional cylindrical rod H2, I, D, G, H1 towards and in contact with the base A and/or the wall B and/or the rod J, the additional cylindrical rod I, H2, D, G, H1 forming an angle αX1 of 0°, 45°, 150°, 210° or 225° with respect to an imaginary axis XX1 parallel to the base A passing through the first node X1.

In a preferred embodiment, the reticular structure comprises one, or a combination, of the following additional rods:
- an additional cylindrical rod I projecting from the first node X1 towards the second rod J with an angle αX1I of 0° respect to the imaginary XX1 axis, generating an attachment point 4j; 1i with the second rod J;
- an additional cylindrical rod H2 projecting from the first node X1 towards the second rod J at an angle αX1H2 of 45° to the imaginary XX1 axis, generating an attachment point 2h;3j with rod J;
- an additional cylindrical rod D projecting from the first node X1 towards wall B at an angle αX1D of 150° to the imaginary axis XX1 generating an attachment point 3b with wall B;
- an additional cylindrical rod G projecting from the first node X1 towards the base A at an angle αX1G of 210° to the imaginary XX1 axis, generating an attachment point 3a with the base A, and
- an additional cylindrical rod αX1H1 projecting from the first node X1 towards the base A at an angle of 225° to the imaginary XX1 axis, creating an attachment point 4a with the base A.

In the context of the invention, angles are set counterclockwise unless otherwise stated.

Thus, the structure allows testing manufacturing parameters of multiple angles of the metal part to be manufactured.

In a preferred embodiment, the first rod C comprises a length Lc between the end 2A of the base A and the end 2B of the wall B. The first node X1 is arranged at a distance of ¼ of the length Lc with respect to the second end 2A of the base A

Preferably, the additional rods described above all originate from the same node X1, preferably, this node X1 is arranged at a distance of ¼ of the length Lc with respect to the second end 2A of the base A. This makes it possible to test the effect of the manufacturing parameters on the most common angles of lattice structures.

Depending on the metal part to be manufactured, it may be necessary to test the effect of the manufacturing parameters on other types of angles and/or thicknesses of the metal part to be manufactured. Thus, in a preferred embodiment, as shown in figures 1 to 3, the first rod C has a second node X2 from which an additional cylindrical rod E projects towards and in contact with the wall B generating a junction point 4b with the wall B, the additional rod E forming an angle αX2E of 225°+/- 5° with respect to an imaginary axis XX2 parallel to the base A passing through the second node X2. In a preferred embodiment, the second node X2 is arranged at a distance of ¼ of the length Lc of the first rod C with respect to the second end 2B of the wall B.

In one embodiment, the reticular structure of the invention comprises an additional cylindrical rod F extending between the second end 2J of the second rod J and the first end 1A of the base A, the additional cylindrical rod F forming an angle of αAF of 45°+/- 5° with respect to the base A. In this embodiment, the rod F has a junction point X3 with the first rod C.

In order to further optimise the infill and border parameters, in one embodiment of the invention, the base A and the wall B comprise two major faces, one of the faces being a corresponding internal face 3A, 3B, as shown in figure 1. The base A and the wall B further have two minor faces connecting the major faces to each other. The rods of the structure contact or meet at the corresponding internal faces 3A and 3B.

In a preferred embodiment, the rods of the structure project vertically from a proximal part of the face A of the base A, the rods being arranged on the same plane which projects vertically from a proximal part of the face A of the base A. Proximal part means the corner joining the internal face 3A of the base A with a minor face of the base A, or a part close to such a corner.

In terms of width, the internal faces 3A and 3B preferably have a width between 2 and 10 times the diameter of the first rod C, preferably between 5 and 7 times, as this width achieves a balance in the use of metallic materials, with good manufacturing stability and a good testing result. In a preferred embodiment, the rods have a diameter of between 0.15 and 0.5 mm, therefore, the width of the internal faces 3A and 3B is between 7.5 and 25 mm. With respect to the dimensions of the structure, in a preferred embodiment the base A and the wall B have a length of 19.00 ± 2 mm and a thickness of 1.00 ± 0.03 mm (corresponding to the length and width of the smaller face).

The inventors have therefore created a structure that has optimised the amount of metallic material needed to define or set the manufacturing parameters, convenient in cases where the metallic material to be used is limited or expensive, as is often the case with Ti6Al4V, precious metals or new alloys with scandium, zirconium or rare earths, for example.

A second aspect of the invention relates to a method for establishing powder bed fusion additive manufacturing parameters of a metal part, comprising the following steps:
- a first step of manufacturing a reticular structure, as defined above, on a powder bed fusion additive manufacturing platform based on predefined manufacturing parameters;
- a second step of polishing the surface of the reticular structure, preferably to a mirror finish or similar; even more preferably, the surfaces of the base A, the wall B and the rods of the reticular structure are polished to a coplanar surface;
- a third step measurement of any defects on the polished surface; and
- a fourth step of selecting at least one additive manufacturing parameter of the metal part based on the defects measured on the polished surface.

Figures 1, 2A, 2B and 2C show the reticular structure obtained by the method of the invention, where +z is the direction of construction or deposition of the different layers in the manufacturing step of the reticular structure.

In a preferred embodiment, the reticular structure is polished on its front side. That is to say, the polished surface is contained on a plane tangent to the proximal part of the internal face 3A of the base A.

In another embodiment, prior to polishing, the reticular structure is set in a resin or bakelite.

The measurement of defects can be performed in different ways. In one embodiment of the invention, the measurement of defects is performed by visual analysis, identifying roughness and/or angle stability parameters of the reticular structure, and/or measuring the number, distribution and/or total area of pores present on the polished surface of the reticular structure. In one embodiment, this porosity measurement is performed by obtaining an image or photograph of the polished surface and then measuring the total area of the polished surface and the total surface area of the pores present on the surface of the reticular structure. The number and distribution of pores on the polished surface can also be measured.

Porosity can be established by calculating the surface area corresponding to the pores or total number of pores present on the polished surface, with respect to the total polished surface area of the reticular structure.

For a better optimisation of the method, in one embodiment of the invention, in the first step, multiple reticular structures are manufactured, where each reticular structure is manufactured with different predefined manufacturing parameters. Each reticular structure undergoes the remaining stages of the method. Thus, with a single implementation of the method, multiple variables of the manufacturing process of the metal part can be tested.

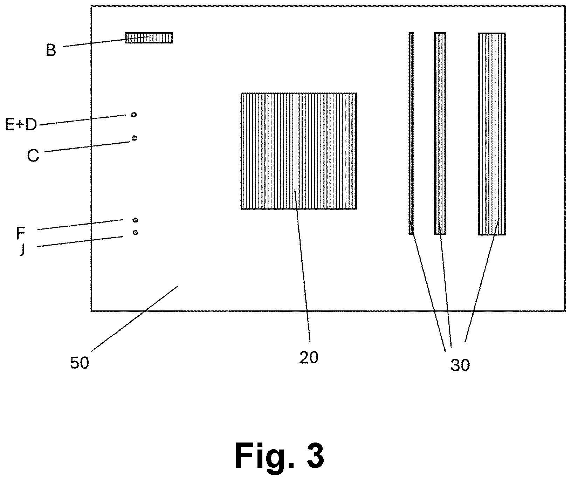

Figure 3 shows an image of a plan view of a powder bed fusion additive manufacturing platform 50 where the laser trajectories for the manufacture of the structure of figure 1 and two other structures of the prior art (cube 20 and walls 30 of different thickness) are shown. The instant shown in figure 3 is the instant at which a node X4 shown in figure 2A is reached, where rod D and rod E are joined, with wall B and rods E, D, C, F and J being visible. These structures are manufactured layer by layer (growth with direction+ z in figure 2A, 2B), each layer being obtained with one laser pass. In each pass, different laser trajectories with a start and an end are applied on the bed of powdered metallic material. The trajectories are established on the basis of the structure to be manufactured. One of the advantages of the method is that for the manufacture of the reticular structure of the invention, point or short distance laser trajectories are required, unlike the cube 20 or walls 30, which require longer paths. One of the advantages of applying these short or point trajectories is that it allows the deposition of the next layer before the previous layer solidifies, better simulating the effects that would occur in the metal part to be manufactured.

Figure 3 also shows the trajectories for the other structures of the state of the art. In these cases, the layers following the first layer are deposited on top of already solidified layers, as the required trajectories distances are such that when the next layer is deposited, the previous layer is solidified or almost solidified.

The following table specifies the type of trajectory that is established for each part of the reticular structure of the invention, according to some of the embodiments of the invention

| Reference | Type of structure | Angle of the structure (°) with respect to the manufacturing platform in counterclockwise direction | Thickness or diameter (mm) | Type of trajectories used |
|---|---|---|---|---|
| A | Wall | 0 ± 5 | 1 ± 0.03 | Infill + 2 Borders |
| B | Wall | 90 ± 5 | 1 ± 0.03 | Infill + 2 borders |
| C | Rod | 135 ± 5 | ø 0.40 ± 0.03 | Infill + 2 borders |
| D | Rod | 150 ± 5 | ø 0.40 ± 0.03 | Infill + 2 borders |
| E | Rod | 45 ± 5 | ø 0.15 ± 0.02 | Road blocked |
| F | Rod | 45 ± 5 | ø 0.20 ± 0.02 | Road blocked + 1 border |
| G | Rod | 210 ± 5 | ø 0.40 ± 0.03 | Infill + 2 borders |
| H | Rod | 45 ± 5 | ø 0.30 ± 0.03 | Infill + 2 borders |
| I | Rod | 0 ± 5 | ø 0.40 ± 0.03 | Infill + 2 borders |
| J | Rod | 90 ± 5 | ø 0.40 ± 0.03 | Infill + 2 borders |

One of the advantages associated with the method of the invention is that it allows the study of the interaction of infill and border trajectories, which is fundamental in reticular and thin metal parts, such as parts for use in the medical implant sector or in the aerospace sector, among others. The method makes it possible to reproduce angles of reticular metal parts with angles that are difficult to manufacture, making it possible to obtain and interpret multiple data and information on manufacturing parameters that are difficult to obtain with prior art structures. With the method of the invention intermediate steps are avoided, allowing the analysis of both infill and border parameters in the same structure. It also allows on a single plane (polished surface) to know the strategies and trajectories used in all the rods, facilitating their interpretation. Furthermore, the reduced size and ease of extraction of the reticular structure from the manufacturing platform reduces processing times.

The following are illustrative examples which demonstrate the features and advantages of the invention, but are not to be construed as limiting the subject matter of the invention as defined in the claims.

### Examples

### Comparison: Establishment of manufacturing parameters of a metal part according to the method of the invention and the traditional method by cubes.

In order to demonstrate the advantages of the invention, the manufacturing parameters of a metal part made of Scalmalloy HX, an aluminium alloy with scandium and zirconium, have been established using two methods.

The porosity is established by calculating the surface area corresponding to the pores present on the polished surface with respect to the total polished surface area of the reticular structure. In both cases the porosity is measured by taking and mounting images with a LEICA DVM6 loupe. The images are taken at a scale of 2mm with which by taking 8x8 detail images then automatically mounted the final image of the geometry is generated, with an original resolution of 10102 pixels wide x 9688 pixels high and both a horizontal and vertical resolution of 96dpi and a depth of 8 bits. The total surface areas of the reticular structure and the pore surface have been calculated using LEICA LAS V4.13 software.

### Method 1: Traditional method using cubic samples

For the conventional method, a series of infill parameters are used for optimisation over two production runs of 15 and 12 cubic samples respectively. The main objective of series 1 is to achieve a relative density higher than 99.95%, and once achieved, to improve its productivity by increasing the scanning speed through series 2.

**Table 1: Infill parameter optimisation series 1**

| **Exp. no.** | **Laser Power (W)** | **Scanning speed (mm/s)** | **Distance between strands (µm)** | **Layer height (µm)** | **Volumetric Energy Density (J/mm³)** | **Relative density (%)** |
|---|---|---|---|---|---|---|
| 1 | 300 | 1100 | 85 | 30 | 107 | 99,95 |
| 2 | 300 | 900 | 70 | 30 | 159 | Not manufactured |
| 3 | 350 | 1100 | 100 | 30 | 106 | 99,57 |
| 4 | 350 | 900 | 85 | 30 | 153 | Not manufactured |
| 5 | 250 | 1100 | 70 | 30 | 108 | 99,93 |
| 6 | 250 | 1100 | 100 | 30 | 76 | 99,99 |
| 7 | 300 | 900 | 100 | 30 | 111 | 99,54 |
| 8 | 350 | 1100 | 70 | 30 | 152 | Not manufactured |
| 9 | 300 | 1100 | 85 | 30 | 107 | 99,95 |
| 10 | 350 | 1300 | 85 | 30 | 106 | 99,99 |
| 11 | 300 | 1300 | 100 | 30 | 77 | 99,99 |
| 12 | 300 | 1300 | 70 | 30 | 110 | 99,99 |
| 13 | 250 | 1300 | 85 | 30 | 75 | 99,96 |
| 14 | 250 | 900 | 85 | 30 | 109 | 99,86 |
| 15 | 375 | 1350 | 170 | 30 | 54 | 99,98 |

**Table 2: Infill parameter optimisation series 2**

| **Exp. no.** | **Laser Power (W)** | **Scanning speed (mm/s)** | **Distance between strands (µm)** | **Layer height (µm)** | **Volumetric Energy Density (J/mm³)** | **Relative density (%)** |
|---|---|---|---|---|---|---|
| 1 | 300 | 1300 | 110 | 30 | 70 | 99,98 |
| 2 | 300 | 1300 | 120 | 30 | 64 | 99,96 |
| 3 | 300 | 1300 | 130 | 30 | 59 | 99,99 |
| 4 | 300 | 1300 | 140 | 30 | 55 | 99,99 |
| 5 | 300 | 1300 | 150 | 30 | 51 | 99,96 |
| 6 | 300 | 1300 | 160 | 30 | 48 | 99,95 |
| 7 | 350 | 1300 | 110 | 30 | 82 | 99,98 |
| 8 | 350 | 1300 | 120 | 30 | 75 | 99,99 |
| 9 | 350 | 1300 | 130 | 30 | 69 | 99,99 |
| 10 | 350 | 1300 | 140 | 30 | 64 | 99,99 |
| 11 | 350 | 1300 | 150 | 30 | 60 | 99,98 |
| 12 | 350 | 1300 | 160 | 30 | 56 | 99,93 |

After obtaining the configurations that allowed a relative density (higher than 99.95%) and a high production rate, a third series (Table 3) is used to study the border parameters by means of 16 more cubic samples. In this series, the infill parameters are kept constant, using results from the previous series.

**Table 3: Series 3 border parameter optimisation by traditional method.**

| **num. Exp.** | **Num. Borders** | **Num. infill contours** | **Dist.fill - fill contour** | **Dist. Infill contour-border** | **Dist.fill-border** | **Laser power (W)** | **Scanning speed (mm/s)** | **Relative border density (%)** |
|---|---|---|---|---|---|---|---|---|
| 1 | 1 | 1 | -0,02 | 0,17 | 0,15 | 300 | 730 | 99,99 |
| 2 | 1 | 1 | -0,02 | 0,17 | 0,15 | 300 | 820 | 99,99 |
| 3 | 1 | 1 | -0,02 | 0,17 | 0,15 | 300 | 910 | 99,99 |
| 4 | 1 | 1 | -0,02 | 0,17 | 0,15 | 300 | 1000 | 99,98 |
| 5 | 1 | 1 | -0,03 | 0,17 | 0,2 | 300 | 730 | 99,93 |
| 6 | 1 | 1 | -0,03 | 0,17 | 0,2 | 300 | 820 | 99,99 |
| 7 | 1 | 1 | -0,03 | 0,17 | 0,2 | 300 | 910 | 99,99 |
| 8 | 1 | 1 | -0,03 | 0,17 | 0,2 | 300 | 1000 | 99,99 |
| 9 | 1 | 0 | - | - | 0,15 | 300 | 730 | 98,59 |
| 10 | 1 | 0 | - | - | 0,15 | 300 | 820 | 99,48 |
| 11 | 1 | 0 | - | - | 0,15 | 300 | 910 | 99,89 |
| 12 | 1 | 0 | - | - | 0,15 | 300 | 1000 | 98,25 |
| 13 | 1 | 0 | - | - | 0,2 | 300 | 730 | 99,22 |
| 14 | 1 | 0 | - | - | 0,2 | 300 | 820 | 96,39 |
| 15 | 1 | 0 | - | - | 0,2 | 300 | 910 | 93,63 |
| 16 | 1 | 0 | - | - | 0,2 | 300 | 1000 | 94,52 |

After optimising both infill and border parameters, a series of lattice metal parts are manufactured with these parameters and the porosity is measured. In all of them, a percentage of porosity greater than 0.40% was detected. The best result obtained corresponds to a relative density of 99.58%.

### Method 2: Method of the invention

Four reticular structures according to figure 1 are manufactured on a single manufacturing platform, varying their infill and border parameters (Table 4), following the method of the invention.

**Table 4: Infill and border parameters**

| **Distance between strands 0,13mm** | **INFILL** | | **BORDERS** | | | |
|---|---|---|---|---|---|---|
| **Experiment** | **Scanning speed (mm/s)** | **Laser Power (W)** | **Scanning speed (mm/s)** | **Laser Power (W)** | **Border distance (µm)** | **Total relative density (%)** |
| 1 | 700 | 250 | 1300 | 300 | 0,03 | 99.96 |
| 2 | 1500 | 350 | 1300 | 300 | 0,03 | 99.88 |
| 3 | 700 | 250 | 900 | 250 | 0,03 | 99.97 |
| 4 | 1500 | 350 | 900 | 250 | 0,03 | 99.98 |

A series of lattice or lattice-like metal parts are manufactured with these parameters and the porosity is measured. In all of them, a percentage of porosity of less than 0.20% was detected. The best result obtained corresponds to a relative density of 99.98 %.

The following table shows comparative data for the two methods

| | **Volume (cm³)** Part + support/base | **Material required (g)** Part + support/base | **Manufacturing time** |
|---|---|---|---|
| Traditional method: 1 bucket | 1,088 | 3,025 | 1h 24min |
| 1 reticular structure of the invention | 0,182 | 0,506 | 1h 43min |
| Traditional method: SERIES 1 (15 buckets) | 16,320 | 45,375 | 1h 54 min |
| Traditional method: SERIES 2 (12 cubes) | 13,056 | 36,3 | 1h 34min |
| Traditional method: SERIES 3 (16 cubes) | 17,408 | 48,394 | 1h 36min |
| 4 reticular structures of the invention | 0,728 | 2,024 | 1h 43min |
| 16 reticular structures of the invention | 1,456 | 4,048 | 1h 45min |

For the total manufacture of the cubic specimens with the traditional method, a quantity of 130.069 g is required, whereas for the manufacture of the 4 units of the structure according to the invention, only 2.024 g is required. In case this is not an ideal way and further iteration is needed, in the case of iterating 3 times and thus manufacturing 16 reticular structures, the total material required for the method of the invention would be 4,048 g, which is still far from that required by the conventional method.

Similarly, in terms of time, for the manufacture of the series, the total time is 5h 04min, compared to the constant time of around 1h 43min for the reticular structures of the invention, regardless of the number of structures incorporated (between 1 and 16). It should be noted that these times do not include their removal from the manufacturing platform, cutting, resin setting, sanding, polishing and subsequent analysis, which increases considerably according to the number of total samples. In these preparation times, the comparison would be more remarkable because of the individual cutting and setting of the cubes, their preparation for sanding and polishing and the individual taking of images, where each unit increases the total value of the time considerably.

With these results, both in total manufacturing time, material quantity and final relative density obtained, the structure and method of the invention improve the results of the conventional method.

## Claims

1. Metallic reticular structure used for establishing powder bed fusion additive manufacturing parameters of a metal part, comprising:
- a rectangular shaped base (A) having a first end (1A) and a second end (2A),
- a rectangular shaped wall (B) having a first end (1B) and a second end (2B), the wall (B) projecting from the first end (1A) of the base (A) at an angle αAB of 90°+/- 5°, the first end (1B) of the wall (B) being attached to the first end (1A) of the base (A),
- a first rod (C) of cylindrical shape extending between the second end (2A) of the base (A) and the second end (2B) of the wall (B), the first rod (C) forming with respect to the wall (B) an angle αBC of 45°+/- 5°, and
- a second rod (J) of cylindrical shape having a first end (1J) and a second end (2J), the second rod (J) projecting from the second end (2A) of the base (A) at an angle αAJ of 90°+/- 5°, the first end (1J) of the second rod (J) being attached to the first end (2A) of the base (A).

2. Reticular structure according to claim 1, wherein the first rod (C) has a first node (X1) from which at least one additional cylindrical rod (I, H2, D, G, H1) projects towards and in contact with the base A and/or the wall B and/or the second rod J, the additional cylindrical rod (I, H2, D, G, H1) forming an angle of 0°, 45°, 150°, 210° or 225° with respect to an imaginary axis XX1 parallel to the base (A) passing through the first node (X1).

3. Reticular structure according to claim 2, wherein the additional cylindrical rods comprise:
- an additional cylindrical rod (I) projecting from the first node (X1) towards the second rod (J) at an angle of 0° to the imaginary XX1 axis, and/or
- an additional cylindrical rod (H2) projecting from the first node (X1) towards the second rod (J) at an angle of 45° to the imaginary XX1 axis, and/or
- an additional cylindrical rod (D) projecting from the first node X1 towards the wall (B) at an angle of 150° to the imaginary XX1 axis, and/or
- an additional cylindrical rod (G) projecting from the first node X1 towards the base (A) at an angle of 210° to the imaginary XX1 axis, and/or
- an additional cylindrical rod (H1) projecting from the first node X1 towards the base (A) at an angle of 225° to the imaginary XX1 axis.

4. Reticular structure according to any of the preceding claims, wherein the first rod (C) has a length Lc between the second end (2A) of the base (A) and the second end (2B) of the wall (B), the first node X1 being arranged at a distance of ¼ of the length Lc of the first rod (C) with respect to the second end (2A) of the base (A).

5. Reticular structure according to any of the preceding claims, wherein the first rod (C) has a second node (X2) from which an additional cylindrical rod (E) projects towards and in contact with the wall (B), the additional rod (E) forming an angle of 225°+/- 5° with respect to an imaginary XX2 axis parallel to the base (A) passing through the second node (X2).

6. Reticular structure according to claim 5, wherein the second node (X2) is arranged at a distance of ¼ of the length Lc of the first rod (C) with respect to the second end (2B) of the wall (B).

7. Reticular structure according to any of the preceding claims, comprising an additional cylindrical rod (F) extending between the second end (2J) of the second rod (J) and the first end (1A) of the base (A), the additional cylindrical rod (F) forming an angle of αAF of 45°+/- 5° with respect to the base (A).

8. Reticular structure according to any of the preceding claims, wherein the base (A) has an internal face (3A) and the wall (B) has an internal face (3B), the rods (C,D,E,F,G,H1,H2,I) contacting on the internal faces (3A, 3B).

9. Reticular structure according to the preceding claim, wherein the width of each internal face (3A,3B) is greater than between 2 and 10 times the diameter of the first rod (C), preferably between 5 and 7 times.

10. Reticular structure according to claim 8 or 9, wherein the rods (C,D,E,F,G,H1,H2,I) are arranged on the same plane, preferably on a plane which projects vertically from a proximal part of the internal face (3A) of the base (A).

11. Reticular structure according to any of the preceding claims, wherein the rods (C,D,E,F,G,H1,H2,I) have a diameter of between 0.15 and 0.5 mm.

12. Reticular structure according to any of the preceding claims, wherein the base (A) and the wall (B) have a length of 19.00 ± 2.00 mm and a thickness of 1.00 ± 0.03 mm.

13. Method for establishing powder bed fusion additive manufacturing parameters of a metal part, comprising the following steps:
a. manufacturing a reticular structure according to any one of the preceding claims on a powder bed fusion additive manufacturing platform based on predefined manufacturing parameters;
b. polishing the surface of the reticular structure;
c. measuring defects on the polished surface; and
d. selecting one of additive manufacturing parameters of the metal part based on the defects measured on the polished surface.

14. Method according to claim 13, wherein the defect measurement step comprises measuring the porosity of the polished surface.

15. Method according to claim 13 or 14, wherein multiple reticular structures are manufactured, and each reticular structure is manufactured with different predefined manufacturing parameters.
